# EUROPÄISCHE PATENTSCHRIFT

(11) **EP 0 385 393 B1**
(45) Veröffentlichungstag und Bekanntmachung des Hinweises auf die Patenterteilung: **01.12.1993**
(21) Anmeldenummer: 90103792.9
(22) Anmeldetag: 27.02.1990
(51) Int. Cl.: F16H 59/50, E02F 9/20

(54) **Fahrzeuggetriebe mit mindestens zwei Gängen, insbesondere für Baumaschinen, wie Schaufellader**
Vehicle transmission with at least two ratios, especially for construction machines, for example tractor shovel
Transmission pour véhicule comportant au moins deux rapports, en particulier pour véhicules de chantier, par exemple chargeuses à pelle

(30) Priorität: 03.03.1989 US 319381
(43) Veröffentlichungstag der Anmeldung: 05.09.1990
(73) Patentinhaber: DEERE & COMPANY, Moline, Illinois 61265 (US)
(72) Erfinder: Oftedal, Teryl Marvin, Tsukuba-shi, Ibaraki-Ken 305 (JP); Bourgeous, Clarence Grant, Dubuque, Iowa 52001 (US); Morita, Haruyuki, Ibaraki-Ken 315 (JP); Miyaji, Masayoshi, Tochigi Ken 329-02 (JP)
(74) Vertreter: Feldmann, Bernhard

(56) Entgegenhaltungen:
- EP-A- 0 270 674
- GB-A- 2 042 105
- US-A- 4 610 178
- PATENT ABSTRACTS OF JAPAN, Band 12, Nr. 302 (M-732)(3149), 17. August 1988

## Beschreibung

Die Erfindung bezieht sich auf ein Fahrzeuggetriebe mit mindestens zwei Gängen, insbesondere für Baumaschinen, wie Schaufellader, wobei einem Stromkreis mit wenigstens einem über Schalter auf- und aberregbaren Magnetventil zum Ein-und Ausrücken von Schaltkupplungen ein Steuerkreis zugeschaltet ist, der wenigstens ein an einen weiteren Schalter angeschlossenes Relais aufweist, über das bei geschlossenem weiteren Schalter das Magnetventil auferregbar ist und das Fahrzeuggetriebe herunterschaltet.

Dieses bekannte Fahrzeuggetriebe (US-A-4 610 178) ist an einem Schaufellader vorgesehen und wird durch einen Druckschalter, der sich in einem Bedienungselement für die Schaufel befindet, heruntergeschaltet. Derartige Schaltungen sollen die Bedienung des Fahrzeuges beim Laden und Entladen der Schaufel erleichtern, wobei zum Laden gewöhnlich mit abgesenkter Schaufel in das Gut vorwärts hineingefahren und zum Entladen das Fahrzeug in der Regel rückwärts gefahren und die in Transportstellung hochgeschwenkte Schaufel nach Erreichen des Abladeplatzes abgekippt wird. Bei diesen Vorgängen muß das Fahrzeug auch noch gelenkt werden, was ein gutes Können und eine hohe Konzentration der Bedienungsperson erfordert. Der Arbeitsdruck verlangt ferner, daß diese Vorgänge schnell ablaufen, weshalb normalerweise im zweiten Gang auf das aufzuladende Gut zugefahren und kurz vorher in den ersten Gang zurückgeschaltet wird. Nach dem Laden der Schaufel wird im zweiten Rückwärtsgang zurückgesetzt. Zum Herunterschalten in den ersten Gang muß die Bedienungsperson bei diesem Fahrzeuggetriebe den Druckschalter herunterdrücken, um den Steuerkreis zu aktivieren, und in der heruntergedrückten Stellung halten, solange in dem niedrigeren Gang gefahren werden soll. Beim Loslassen des Druckschalters - aus welchem Grund auch immer - schaltet das Fahrzeuggetriebe wieder herauf. Hierdurch sind Bedienungsfehler nicht auszuschließen, und die Bedienungsperson muß in jedem Fall den Druckschalter gesondert betätigen.

Andererseits ist es auch nicht mehr neu (WO-A-87/06287), nachdem Fühler eine bestimmte Stellung der Schaufel und ihres Hubgestänges ermittelt haben, ein Fahrzeuggetriebe automatisch herunterzuschalten. Der Schaltvorgang setzt damit eine bestimmte Stellung der Schaufel und ihres Hubgestänges voraus, so daß gegebenenfalls bei eingeschalteter Automatik und abgesenkter Schaufel nicht in einem höheren Gang gefahren werden kann. Dies ist nur möglich, wenn die Schaufel wieder eine vorgegebene Höhenposition einnimmt, in die die Bedienungsperson die Schaufel verstellen müßte, um schneller fahren zu können.

Bei einer Steuerung für ein automatisches Getriebe (GB-A-2 042 105) ist es bereits bekannt, daß eine automatische Motorbremsung durch selbsttätiges Herunterschalten von einem höheren Gang in einen niedrigeren bei freigegebenem Gaspedal und getretenem Bremspedal ausgeführt wird, wenn infolge einer Bergfahrt die Fahrzeuggeschwindigkeit einen bestimmten Wert übersteigt. Hierzu sind eine Leerlauf-Erfassungseinrichtung zum Erfassen der Freigabe des Gaspedals, eine Bremsbetätigungs-Erfassungseinrichtung zum Erfassen des Tretens des Bremspedals und eine Beschleunigungs-Diskriminatoreinrichtung zum Erfassen einer Beschleunigung vorgesehen, die bei entsprechenden Signalen beim Befahren eines Gefälles einen Herunterschalt-Elektromagneten erregen, der seinerseits dann ein Schaltventil betätigt, das ein Herunterschalten des Fahrzeuggetriebes bewirkt. Mit dieser Steuerung soll nur dann eine automatische Motorbremsung ausgeführt werden, wenn diese auch tatsächlich erforderlich ist. Damit dient das Herunterschalten zur Erreichung einer Motorbremsung und nicht zu einer Erhöhung der Durchzugskraft der Antriebsräder.

Die mit der Erfindung zu lösende Aufgabe wird darin gesehen, daß ein Herunterschalten des Fahrzeuggetriebes bzw. Aktivieren des Steuerkreises automatisch, jedoch in Abhängigkeit von einem Bedienungsvorgang erfolgt, den die Bedienungsperson vor dem Laden der Schaufel grundsätzlich vornehmen muß, und das Zurückschalten bzw. Deaktivieren des Steuerkreises in Abhängigkeit von einem anderen Bedienungsvorgang ebenfalls automatisch erfolgen kann.

Diese Aufgabe ist nach der Erfindung dadurch gelöst worden, daß der weitere Schalter des Steuerkreises in Abhängigkeit von der Betätigung eines eine Differentialsperre ein- und ausrückenden Bedienungselementes am Fahrzeug geschlossen wird und daß der Steuerkries Mittel derart enthält, daß das Magnetventil auch bei Rückführung des Bedienungselementes in seine Ausgangsstellung auferregt bleibt.

Auf diese Weise braucht die Bedienungsperson keinen zusätzlichen Bedienungsvorgang auszuführen und kann ihre Aufmerksamkeit voll auf den Ladevorgang richten. Auch wenn die Bedienungsperson den Bedienungsvorgang wieder rückgängig macht, d. h. den Vorgang beendet, bleibt der Steuerkreis aktiviert und das Fahrzeug in dem niedrigeren Gang. Im ganzen gesehen wird damit das Herunterschalten nicht durch die Betätigung eines gesonderten Schalters ausgelöst, sondern erfolgt bei Betätigung einer Differentialsperre automatisch. Andererseits bleibt das Fahrzeuggetriebe im niedrigen Gang, wenn bei Kurvenfahrten die Differentialsperre gelöst wird.

Besonders vorteilhaft läßt sich das erfindungsgemäße Fahrzeuggetriebe bei einem Schaufellader einsetzen, dessen Räder beim Erreichen des aufzuladenden Gutes, wie zum Beispiel mit Felsbrocken durchsetztes Erdreich, sehr viel Kraft auf den Boden bringen müssen, wozu die Bedienungsperson in der Regel das Differential sperren muß. Damit wird das Fahrzeuggetriebe, beispielsweise beim schnelleren Heranfahren im zweiten Gang, automatisch in der ersten Gang geschaltet, sobald die Bedienungsperson den Hebel zum Einrücken der Differentialsperre betätigt.

Ein einfacher Aufbau des Strom- und Steuerkreises ist möglich, wenn nach einem weiteren Vorschlag der Erfindung das Magnetventil derart in den Stromkreis und den Steuerkreis geschaltet ist, daß es bei stromführendem Steuerkreis das Fahrzeuggetriebe herunterschaltet und im nicht erregten Zustand das Fahrzeuggetriebe heraufschaltet.

Andererseits ist es nicht immer erwünscht, daß das Getriebe, wenn ein Schaltvorgang ausgelöst wird, automatisch herunterschaltet, weshalb erfindungsgemäß noch vorgesehen werden kann, daß der weitere Schalter stromaufwärts vor einem Hauptschalter angeordnet und zu diesem in Reihe geschaltet ist.

Wird der Hauptschalter durch die Bedienungsperson in seine Aus-Stellung verbracht, so ist der Steuerkreis nicht aktivierbar, und eine Betätigung beispielsweise des Hebels für die Differentialsperre löst kein Herunterschalten aus, was insbesondere dann von Vorteil ist, wenn das Fahrzeug in schwierigen Bedingungen schneller gefahren werden soll.

Der Steuerkreis kann so ausgelegt werden, daß ein Herunterschalten nur bei einem bestimmten Gang, wie dem zweiten, möglich ist, nicht jedoch im dritten oder vierten Gang. Um dies zu erreichen, sieht die Erfindung ferner vor, daß der Steuerkreis mit einem Gangfühler versehen ist, der im einzelnen als ein erstes Relais ausgebildet sein kann, dessen Spule zu einem vierten Schalter in Reihe geschaltet ist. Auf diese Weise wird die Spule des Relais nur mit Strom versorgt, wenn der vierte Schalter geschlossen ist. Dieser wird zweckmäßig über den Getriebeschalthebel geschlossen, wenn ein bestimmter Gang, wie z. B. der zweite, geschaltet wurde.

Gleichzeitig kann nach der Erfindung ebenfalls vorgesehen werden, daß der Steuerkreis mit einem Richtungsfühler versehen ist, so daß eine Aktivierung des Steuerkreises nur möglich ist, wenn das Fahrzeug vorwärts oder rückwärts fährt. Beim Einsatz des Fahrzeuggetriebes in einem Schaufellader ist ein automatisches Herunterschalten bei Rückwärtsfahrten nicht unbedingt nötig oder gegebenenfalls auch nicht erwünscht, weshalb ferner der Richtungsfühler als ein zweites Relais ausgebildet ist, dessen Spule nur bei Vorwärtsfahrt erregt wird. Dies ergibt den zusätzlichen Vorteil, daß, wenn das Fahrzeug - wie bei Schaufelladern üblich - mit einem gesonderten Steuerhebel für Vorwärts- und Rückwärtsfahrt ausgerüstet ist, bei Verstellung des Steuerhebels in seine Position für Rückwärtsfahrt der Steuerkreis deaktiviert wird, wodurch der höhere Gang wieder eingerückt wird und das Fahrzeug dann schneller zurückfahren kann. Der Steuerkreis wird automatisch deaktiviert.

Damit der Steuerkreis nur eingeschaltet werden kann, wenn der weitere Schalter und der Hauptschalter geschlossen sind, kann die Spule eines dritten Relais zu dem weiteren Schalter und dem Hauptschalter in Reihe geschaltet sein und wird damit nur bei geschlossenen Schaltern stromführend. Nach einem weiteren Vorschlag der Erfindung bleibt der Steuerkreis aber eingeschaltet, auch wenn der weitere Schalter oder der Hauptschalter in ihre Aus-Stellung verstellt werden, wenn der Steuerkreis mit einem vierten Relais versehen ist, dessen Spule an den Schalter des dritten Relais und an eine Halteschleife angeschlossen ist.

Zweckmäßig sind hierzu die Schalter des ersten, zweiten und dritten Relais zueinander in Reihe geschaltet, und der Schalter des vierten Relais ist zu dem Schalter des dritten Relais parallel geschaltet. Somit wird zu dem Schalter des vierten Relais bei geschlossenen Schaltern des ersten und zweiten Relais auch dann noch Strom geführt, wenn der Schalter des dritten Relais offen ist, was erfolgt, wenn seine Spule bei offenem weiteren Schalter oder Hauptschalter stromlos wird.

Schließlich ist der Steuerkreis noch mit einem fünften Relais versehen, dessen Spule mit der Halteschleife verbunden und dessen Schalter zu einem dritten Schalter und dem Magnetventil in Reihe geschaltet ist. Der dritte Schalter wird ebenfalls über den Getriebeschalthebel betätigt und nur in dem Gang geschlossen, aus dem automatisch heruntergeschaltet werden soll.

Soll das Fahrzeuggetriebe mit mehr als zwei Gängen ausgerüstet sein, so kann ferner noch in dem Stromkreis ein zweites Magnetventil zum Schalten einer schnellen und einer langsamen Getriebegruppe vorgesehen werden, das bei einem geschlossenen zweiten Schalter erregt ist und die langsame Getriebegruppe schaltet. Auch der zweite Schalter wird über den Getriebeschalthebel betätigt und ist dann bei Gangstellungen des Getriebeschalthebels für den ersten und zweiten Gang geschlossen, ansonsten offen.

Das erfindungsgemäße Fahrzeuggetriebe läßt sich auch bei Ackerschleppern und anderen landwirtschaftlichen Fahrzeugen einsetzen und dann so ausbilden, daß beispielsweise beim Bremsen automatisch in anderen Gängen ein Herunterschalten erfolgt.

In der Zeichnung ist ein nachfolgend näher erläutertes Ausführungsbeispiel der Erfindung dargestellt. Es zeigt:
- Fig. 1: einen Schaufelradlader in Seitenansicht,
- Fig. 2: einen elektrischen Stromkreis mit integriertem Steuerkreis für eine Stromführung zu Magnetventilen, über die Schaltkupplungen eines Getriebes für den Schaufelradlader betätigbar sind, und
- Fig. 3: eine Tabelle, die zeigt, welche der in Fig. 2 dargestellten Schalter bei welchem Gang geschlossen sein müssen und welche nicht.

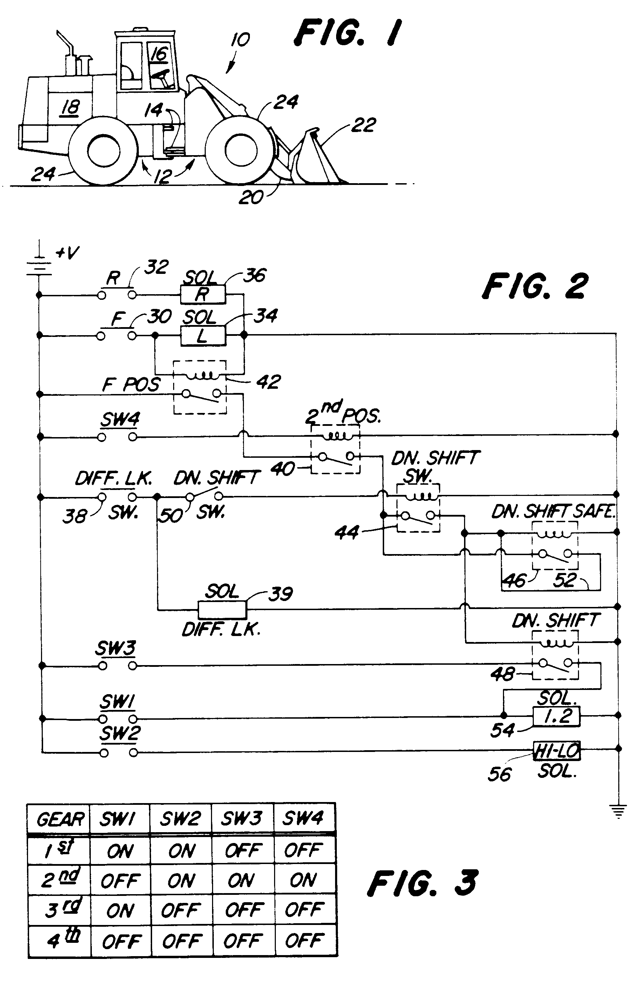

In Fig. 1 der Zeichnung ist ein Schaufelradbagger mit 10 bezeichnet, der eine Tragkonstruktion 12 mit einer Knicklenkung aufweist, wozu Schwenkzapfen 14 vorgesehen sind. Der rückwärtige Teil ist mit einer Fahrerkabine 16 und einem Motorgehäuse 18 ausgerüstet, und am vorderen Teil befindet sich eine Hubvorrichtung 20 mit daran angeschlossener Ladeschaufel 22. Ein in dem Motorgehäuse 18 vorgesehener Verbrennungsmotor dient zum Antrieb eines ebenfalls nicht dargestellten Fahrzeuggetriebes, über das Räder 24 angetrieben werden. Das Fahrzeuggetriebe hat ein vorderes und ein rückwärtiges Differential für die vorderen und rückwärtigen Räder 24. Eine teleskopische Antriebswelle überträgt die Kraft von dem Verbrennungsmotor zu dem vorderen Differential, wobei die Schwenkzapfen 14 überbrückt werden. Das vordere und/oder das rückwärtige Differential ist mit einer Differentialsperre versehen, um im Bedarfsfall mehr Antriebskraft auf den Boden zu bringen.

In Fig. 2 der Zeichnung ist ein elektrischer Stromkreis mit integriertem Steuerkreis dargestellt, der zum Schalten des Fahrzeuggetriebes dient. Vier Schalter SW1, SW2, SW3 und SW4 sind zum Schalten des Fahrzeuggetriebes vorgesehen. Über sie werden Magnetventile mit Strom versorgt, die ihrerseits je nach ihrer Stellung Bremsen und Kupplungen des Fahrzeuggetriebes ein- und ausrücken, um die Gänge zu schalten. Beim Ausführungsbeispiel sind vier Gänge vorgesehen, und welcher Schalter eingerückt oder ausgerückt sein muß, um die vier Gänge schalten zu können, geht aus dem Schaubild in Fig. 3 hervor. Aus diesem ist erkennbar, daß bei eingeschaltetem 1. Gang die Schalter SW1 und SW2 geschlossen und die Schalter SW3 und SW4 offen sind. Im 2. Gang ist der Schalter SW1 offen, und die Schalter SW2, SW3 und SW4 sind geschlossen. Im 3. Gang ist der Schalter SW1 geschlossen, und die Schalter SW2, SW3 und SW4 sind offen. Im 4. Gang sind alle vier Schalter offen. Je nach der Funktion des Fahrzeuggetriebes kann auf den Schalter SW4 verzichtet werden.

Alle vier Schalter SW1 bis SW4 werden über einen nicht dargestellten Getriebeschalthebel gegen die Wirkung von Federn geschlossen, so daß das Öffnen der Schalter selbsttätig erfolgt, sobald der Getriebeschalthebel den entsprechenden Schalter nicht mehr in seine geschlossene Stellung drückt.

Das Schalten des Fahrzeuggetriebes in eine Stellung für Vorwärts- oder Rückwärtsfahrt erfolgt über einen gesonderten Steuerhebel, der hierzu ebenfalls gegen Federwirkung einen Schalter 30 für Vorwärtsfahrt und einen Schalter 32 für Rückwärtsfahrt wechselseitig schließt. Jeder dieser beiden letztgenannten Schalter 30, 32 ist in Reihe zu einem Magnetventil 34 bzw. 36 geschaltet, über die die Drehrichtung des Fahrzeuggetriebes umkehrbar ist.

Um die Differentialsperre einrücken zu können, ist ein weiterer Schalter 38 vorgesehen, der hierzu ein Magnetventil 39 mit Strom versorgen kann. Sobald das Magnetventil 39 erregt ist, wird das vordere und/oder das rückwärtige Differential gesperrt. Der weitere Schalter 38 kann gegen Federwirkung über ein Pedal geschlossen werden, das sich im Bereich einer Fußbremse befinden kann.

Der in Fig. 2 dargestellte Steuerkreis weist fünf Relais 40, 42, 44, 46 und 48 auf. Jedes Relais hat eine Spule, die im erregten Zustand einen Relaisschalter schließt, der ansonsten offen ist.

Das erste Relais 40 ist als Gangfühler ausgebildet, und seine Spule wird nur mit Strom versorgt, wenn sich der Getriebeschalthebel in seiner Schaltstellung für den 2. Gang befindet. Hierzu ist die Spule des ersten Relais 40 mit dem Schalter SW4 in Reihe geschaltet und schließt den zugehörigen Relaisschalter nur im 2. Gang. Bei aktiviertem ersten Relais 40 entsteht ein Gangsignal.

Das zweite Relais 42 ist als Richtungsfühler ausgebildet, und seine Spule wird nur mit Strom versorgt, wenn sich der Schalter 30 für Vorwärtsfahrt in seiner geschlossenen Stellung befindet. Die Spule des zweiten Relais 42 ist hierzu zu dem Magnetventil 34 für Vorwärtsfahrt parallel geschaltet, so daß bei geschlossenem Schalter 30 das Magnetventil 34 und die Spule des zweiten Relais 42 gleichzeitig mit Strom versorgt werden. Der Relaisschalter des zweiten Relais wird also nur geschlossen, wenn sich das Fahrzeug in einer Stellung für Vorwärtsfahrt befindet. In der Getriebestellung für Rückwärtsfahrt ist der Relaisschalter des zweiten Relais 42 offen. Bei aktiviertem zweiten Relais 42 entsteht ein Fahrtrichtungssignal.

Die Relaisschalter des ersten und des zweiten Relais 40 und 42 sind in Reihe geschaltet und bilden eine UND Schaltung mit einem kombinierten Gang- und Fahrtrichtungssignal. Zu diesen Relaisschaltern ist auch der Relaisschalter des dritten Relais 44 in Reihe geschaltet, dessen Spule zu dem weiteren Schalter 38 in Reihe geschaltet ist und nur erregt werden kann, wenn der weitere Schalter 38 geschlossen, also die Differentialsperre eingerückt ist. Zwischen dem weiteren Schalter 38 und der Spule des dritten Relais 44 ist noch ein Hauptschalter 50 in Reihe geschaltet. Wenn der Hauptschalter 50, der ein eigenes Betätigungsglied aufweist, offen ist, kann der Steuerkreis nicht aktiviert werden, wohl aber das Magnetventil 39 zum Einrücken der Differentialsperre. Die Spule des dritten Relais 44 wird damit also nur mit Strom versorgt, wenn der weitere Schalter 38 und der Hauptschalter 50 geschlossen sind. Es handelt sich damit um eine UND Schaltung, und bei aktiviertem dritten Relais 44 entsteht ein Differentialsperre- und Ansignal.

Der Relaisschalter des dritten Relais 44 ist mit der Spule des vierten Relais 46 in Reihe geschaltet, dessen Relaisschalter zu dem dritten Relais 44 parallel geschaltet ist. Damit kann der Relaisschalter des vierten Relais 46 nur in seine Schließstellung gebracht werden, wenn das dritte Relais 44 mit Strom versorgt ist. Wird aber der weitere Schalter 38 oder der Hauptschalter 50 geöffnet, wodurch das dritte Relais 44 stromlos wird, so verbleibt der Relaisschalter des vierten Relais 46 dennoch in seiner Schließstellung, da dieses mit einer Halteschleife 52 versehen ist, die die kombinierten Signale des ersten und zweiten Relais 40, 42 der Spule des vierten Relais 46 zuführt, so daß der Steuerkreis nur abschaltbar ist, wenn das Gang- oder Fahrtrichtungssignal nicht mehr durchkommt. Das heißt, wenn das Fahrzeuggetriebe in eine Stellung für Rückwärtsfahrt geschaltet wird oder ein anderer als der zweite Gang gewählt wird, wird die Spule des vierten Relais 46 stromlos, so daß sich deren Relaisschalter öffnet und den Strom zur Halteschleife 52 unterbricht.

Das Ausgangssignal von den Relais 40 und 42 und von dem Relais 44 und/oder dem Relais 46 gelangt zu der Spule des fünften Relais 48. Der Relaisschalter des fünften Relais 48 ist zu dem Schalter SW3 in Reihe geschaltet, der geschlossen ist, wenn sich der Getriebeschalthebel in seiner Schaltstellung für den 2. Gang befindet. Die Ausgangsklemme des Relaisschalters des fünften Relais 48 ist mit dem Ausgang des Schalters SW1 verbunden, der in geschlossenem Zustand das Magnetventil 54 verstellt hat. Der Schalter SW2 ist noch zu einem Magnetventil 56 in Reihe geschaltet, über das das Getriebe in eine schnelle und in eine langsame Getriebegruppe geschaltet werden kann. Bei geschlossenem Schalter SW2 und damit erregtem Magnetventil 56 ist das Fahrzeuggetriebe in seine langsame Getriebegruppe geschaltet, bei offenem Schalter SW2 in die schnelle Getriebegruppe.

Über das Magnetventil 54 werden eine erste und eine zweite Kupplung eingerückt; dabei ist die erste Kupplung eingerückt, wenn das Magnetventil 54 mit Strom versorgt wird, was einmal bei geschlossenem Schalter SW1 und zum anderen bei geschlossenem Schalter SW3 und geschlossenem Relaisschalter des fünften Relais 48 erfolgen kann.

Damit ergeben sich für die einzelnen Gänge folgende Eingriffsverhältnisse:
Im 1. Gang sind die erste Kupplung und die langsame Getriebegruppe ein- und die zweite Kupplung und die schnelle Getriebegruppe ausgerückt.
Im 2. Gang sind die zweite Kupplung und die langsame Getriebegruppe ein- und die erste Kupplung und die schnelle Getriebegruppe ausgerückt.
Im 3. Gang sind die erste Kupplung und die schnelle Getriebegruppe ein- und die zweite Kupplung und die langsame Getriebegruppe ausgerückt.
Im 4. Gang sind die zweite Kupplung und die schnelle Getriebegruppe ein- und die erste Kupplung und die langsame Getriebegruppe ausgerückt.

Durch Schließen des weiteren Schalters 38 und des Hauptschalters 50 bei den Eingriffsverhältnissen im 2. Gang vorwärts wird das Magnetventil 54 über das fünfte Relais 48 mit Strom versorgt, so daß es die zweite Kupplung aus- und die erste Kupplung einrückt. Dadurch wird das Fahrzeuggetriebe in den ersten Gang zurückgeschaltet, ohne daß der Getriebeschalthebel betätigt wird. Wird der Steuerkreis dann beispielsweise durch Verstellen des Steuerhebels in seine Stellung für Rückwärtsfahrt deaktiviert bzw. stromlos, so wird das Magnetventil 54 die erste Kupplung wieder aus- und die zweite Kupplung wieder einrücken. Das Fahrzeug fährt dann im 2. Gang rückwärts.

Wäre der Schalter SW4 nicht vorgesehen, so könnte das Fahrzeuggetriebe auch automatisch vom 4. Gang in den 3. Gang herunterschalten, wenn bei geschlossenem Hauptschalter 50 der weitere Schalter 38 geschlossen wird. Der Hauptschalter 50 wird nur dann geöffnet, wenn bei Schließung des weiteren Schalters 38, wobei nach der vorbeschriebenen Ausführungsform die Differentialsperre eingerückt wird, ein automatisches Herunterschalten nicht erwünscht ist. Auch wenn die Differentialsperre wieder gelöst wird, verbleibt das Fahrzeug in seinem heruntergeschalteten Zustand so lange, bis der Schalter SW4 oder der Schalter 30 geöffnet wird.

Bei dem bevorzugten Ausführungsbeispiel jedoch wird der Ladebetrieb für die Bedienungsperson erheblich vereinfacht. Bei bereits geschlossenem Hauptschalter 50 muß die Bedienungsperson neben einer eventuell erforderlichen Lenktätigkeit die nachfolgenden Schritte ausführen:
1. Zum Einrücken der Differentialsperre beim Heranfahren auf das zu ladende Gut im 2. Gang wird der weitere Schalter 38 (mit dem linken Fuß) geschlossen, und das Fahrzeuggetriebe wird automatisch von dem 2. Vorwärtsgang in den 1. Vorwärtsgang heruntergeschaltet.
2. Die Schaufel wird geladen (rechte Hand).
3. Der Steuerhebel wird aus seiner Stellung F für Vorwärtsfahrt in seine Stellung R für Rückwärtsfahrt verstellt (linke Hand), wobei das Fahrzeuggetriebe automatisch in den 2. Rückwärtsgang verstellt wird.
4. Der Steuerhebel wird wieder in seine Stellung F für Vorwärtsfahrt verstellt (linke Hand), so daß im 2. Vorwärtsgang gefahren wird.
5. Die Schaufel wird entladen (rechte Hand).
6. Vom 2. Vorwärtsgang wird in den 2. Rückwärtsgang geschaltet (linke Hand).
7. Vom 2. Rückwärtsgang wird in den 2. Vorwärtsgang zum Anfahren auf das zu ladende Gut geschaltet (linke Hand), wobei sich für den nachfolgenden Ladevorgang die Schritte 1 bis 7 wiederholen.

## Patentansprüche

1. Fahrzeuggetriebe mit mindestens zwei Gängen, insbesondere für Baumaschinen, wie Schaufellader (10), wobei einem Stromkreis mit wenigstens einem über Schalter (30, 32, SW1 - SW4) auf- und aberregbaren Magnetventil (54) zum Ein- und Ausrücken von Schaltkupplungen ein Steuerkreis zugeschaltet ist, der wenigstens ein an einen weiteren Schalter (38) angeschlossenes Relais (40 - 48) aufweist, über das bei geschlossenem weiteren Schalter (38) das Magnetventil (54) auferregbar ist und das Fahrzeuggetriebe herunterschaltet, dadurch gekennzeichnet, daß der weitere Schalter (38) des Steuerkreises in Abhängigkeit von der Betätigung eines eine Differentialsperre ein- und ausrückenden Bedienungselementes am Fahrzeug geschlossen wird und daß der Steuerkreis Mittel derart enthält, daß das Magnetventil (54) auch bei Rückführung des Bedienungselementes in seine Ausgangsstellung auferregt bleibt.

2. Fahrzeuggetriebe nach Anspruch 1, dadurch gekennzeichnet, daß das Magnetventil (54) derart in den Stromkreis und den Steuerkreis geschaltet ist, daß es bei stromführendem Steuerkreis das Fahrzeuggetriebe herunterschaltet und im nicht erregten Zustand das Fahrzeuggetriebe heraufschaltet.

3. Fahrzeuggetriebe nach Anspruch 1 oder 2, dadurch gekennzeichnet, daß der weitere Schalter (38) stromaufwärts vor einem Hauptschalter (50) angeordnet und zu diesem in Reihe geschaltet ist.

4. Fahrzeuggetriebe nach einem oder mehreren der vorherigen Ansprüche, dadurch gekennzeichnet, daß der Steuerkreis mit einem Gangfühler versehen ist.

5. Fahrzeuggetriebe nach Anspruch 4, dadurch gekennzeichnet, daß der Gangfühler als ein erstes Relais (40) ausgebildet ist, dessen Spule zu einem vierten Schalter (SW4) in Reihe geschaltet ist.

6. Fahrzeuggetriebe nach einem oder mehreren der vorherigen Ansprüche, dadurch gekennzeichnet, daß der Steuerkreis mit einem Richtungsfühler versehen ist.

7. Fahrzeuggetriebe nach Anspruch 6, dadurch gekennzeichnet, daß der Richtungsfühler als ein zweites Relais (42) ausgebildet ist, dessen Spule nur bei Vorwärtsfahrt erregt wird.

8. Fahrzeuggetriebe nach einem oder mehreren der vorherigen Ansprüche, dadurch gekennzeichnet, daß die Spule eines dritten Relais (44) zu dem weiteren Schalter (38) und dem Hauptschalter (50) in Reihe geschaltet ist.

9. Fahrzeuggetriebe nach einem oder mehreren der vorherigen Ansprüche, dadurch gekennzeichnet, daß der Steuerkreis mit einem vierten Relais (46) versehen ist, dessen Spule an den Schalter des dritten Relais (44) und an eine Halteschleife (52) angeschlossen ist.

10. Fahrzeuggetriebe nach einem oder mehreren der vorherigen Ansprüche, dadurch gekennzeichnet, daß die Schalter des ersten, zweiten und dritten Relais (40, 42, 44) zueinander in Reihe geschaltet sind und der Schalter des vierten Relais (46) zu dem Schalter des dritten Relais (44) parallel geschaltet ist.

11. Fahrzeuggetriebe nach einem oder mehreren der vorherigen Ansprüche, dadurch gekennzeichnet, daß der Steuerkreis mit einem fünften Relais (48) versehen ist, dessen Spule mit der Halteschleife (52) verbunden und dessen Schalter zu einem dritten Schalter (SW3) und dem Magnetventil (54) in Reihe geschaltet ist.

12. Fahrzeuggetriebe nach einem oder mehreren der vorherigen Ansprüche, dadurch gekennzeichnet, daß in dem Stromkreis ein zweites Magnetventil (56) zum Schalten einer schnellen und einer langsamen Getriebegruppe vorgesehen ist, das bei einem geschlossenen zweiten Schalter (SW2) erregt ist und die langsame Getriebegruppe schaltet.

## Claims

1. A vehicle transmission with at least two ratios, especially for construction machines such as a shovel loader (10), wherein a control circuit is connected to a circuit with at least one magnetic valve (54) which can he energised and de-energised through switches (30, 32, SW1 - SW4) for engaging and disengaging shift clutches, the control circuit having at least one relay (40 - 48) connected to a further switch (38) and through which the magnetic valve (54) can he energised with the further switch (38) closed and the vehicle transmission be shifted down, characterized in that the further switch (38) of the control circuit is closed in dependence on the operation of an operator element on the vehicle engaging and disengaging a differential lock and in that the control circuit includes means such that the magnetic valve (54) also remains energised on return of the operator element to its starting position.

2. A vehicle transmission according to claim 1, characterized in that the magnetic valve (54) is so connected in the circuit and the control circuit that it shifts the vehicle transmission down when the control circuit carries current and shifts the vehicle transmission up in the de-energised state.

3. A vehicle transmission according to claim 1 or 2, characterized in that the further switch (38) is arranged upstream of a main switch (50) and in series therewith.

4. A vehicle transmission according to one or more of the preceding claims, characterized in that the control circuit is provided with a gear sensor.

5. A vehicle transmission according to claim 4, characterized in that the gear sensor is formed as a first relay (40) whose coil is connected in series with a fourth switch (SW4).

6. A vehicle transmission according to one or more of the preceding claims, characterized in that the control circuit is provided with a direction sensor.

7. A vehicle transmission according to claim 6, characterized in that the direction sensor is formed as a second relay (42) whose coil is only energised during forwards travel.

8. A vehicle transmission according to one or more of the preceding claims, characterized in that the coil of a third relay (44) is connected in series with the further switch (38) and the main switch (50).

9. A vehicle transmission according to one or more of the preceding claims, characterized in that the control circuit is provided with a fourth relay (46) whose coil is connected to the contacts of the third relay (44) and to a holding loop (52).

10. A vehicle transmission according to one or more of the preceding claims, characterized in that the contacts of the first, second and third relays (40, 42, 44) are connected in series and the contacts of the fourth relay (46) are connected in parallel with the contacts of the third relay (44).

11. A vehicle transmission according to one or more of the preceding claims, characterized in that the control circuit is provided with a fifth relay (48) whose coil is connected to the holding loop (52) and whose contacts are connected to a third switch (SW3) and the magnetic valve (54) in series.

12. A vehicle transmission according to one or more of the preceding claims, characterized in that a second magnetic valve (56) for selecting between a fast and a slow gear group is provided in the circuit, which valve is energised with a second switch (SW2) closed and selects the slow gear group.

## Revendications

1. Transmission pour véhicule comportant au moins deux rapports, en particulier pour des engins de chantier, par exemple des chargeuses à pelle (10), un circuit de commande pour embrayer et débrayer des embrayages étant connecté à un circuit électrique comprenant au moins une valve électromagnétique (54) pouvant être excitée et désexcitée par l'intermédiaire de commutateurs (30, 32, SW1 - SW4), le circuit de commande présentant au moins un relais (40 - 48), qui est raccordé à un commutateur supplémentaire (38) et par l'intermédiaire duquel, le commutateur supplémentaire (38) étant fermé, la valve électromagnétique (54) peut être excitée et rétrograde la transmission du véhicule, **caractérisée** en ce que le commutateur supplémentaire (38) du circuit de commande est fermé en fonction de l'actionnement d'un élément de manoeuvre du véhicule qui embraye et débraye un blocage de différentiel, et en ce que le circuit de commande contient des moyens tels que la valve électromagnétique (54) reste excitée même lors du retour de l'élément de manoeuvre dans sa position initiale.

2. Transmission pour véhicule selon la revendication 1, **caractérisée** en ce que la valve électromagnétique (54) est branchée dans le circuit électrique et dans le circuit de commande de telle sorte qu'elle rétrograde la transmission du véhicule lorsque le circuit de commande conduit du courant électrique, et qu'elle fait passer le rapport supérieur de la transmission du véhicule à l'état non excité.

3. Transmission pour véhicule selon la revendication 1 ou 2, **caractérisée** en ce que le commutateur supplémentaire (38) est disposé en amont d'un commutateur principal (50) et lui est relié en série.

4. Transmission pour véhicule selon l'une quelconque des revendications précédentes, **caractérisée** en ce que le circuit de commande est doté d'un détecteur de rapport de transmission.

5. Transmission pour véhicule selon la revendication 4, **caractérisée** en ce que le détecteur de rapport de transmission est réalisé sous la forme d'un premier relais (40), dont la bobine est reliée en série avec un quatrième commutateur (SW4).

6. Transmission pour véhicule selon l'une quelconque des revendications précédentes, **caractérisée** en ce que le circuit de commande est doté d'un détecteur de sens de marche.

7. Transmission pour véhicule selon la revendication 6, **caractérisée** en ce que le détecteur de sens de marche est réalisé sous la forme d'un deuxième relais (42), dont la bobine n'est excitée qu'en marche avant.

8. Transmission pour véhicule selon l'une quelconque des revendications précédentes, **caractérisée** en ce que la bobine d'un troisième relais (44) est reliée en série avec le commutateur supplémentaire (38) et le commutateur principal (50).

9. Transmission pour véhicule selon l'une quelconque des revendications précédentes, **caractérisée** en ce que le circuit de commande est doté d'un quatrième relais (46), dont la bobine est raccordée au commutateur du troisième relais (44) et à une boucle de maintien (52).

10. Transmission pour véhicule selon l'une quelconque des revendications précédentes, **caractérisée** en ce que les commutateurs du premier, du deuxième et du troisième relais (40, 42, 44) sont mutuellement reliés en série, et le commutateur du quatrième relais (46) est relié en parallèle avec le commutateur du troisième relais (44).

11. Transmission pour véhicule selon l'une quelconque des revendications précédentes, **caractérisée** en ce que le circuit de commande est doté d'un cinquième relais (48), dont la bobine est reliée à la boucle de maintien (52) et dont le commutateur est relié en série avec un troisième commutateur (SW3) et avec la valve électromagnétique (54).

12. Transmission pour véhicule selon l'une quelconque des revendications précédentes, **caractérisée** en ce qu'il est prévu dans le circuit électrique une seconde valve électromagnétique (56) pour l'enclenchement d'un groupe rapide et d'un groupe lent de transmission, valve qui est excitée lorsqu'un deuxième commutateur (SW2) est fermé et enclenche alors le groupe lent de transmission.
